# EUROPÄISCHE PATENTANMELDUNG

(11) **EP 4 008 933 A1**
(43) Veröffentlichungstag der Anmeldung: **08.06.2022**
(21) Anmeldenummer: 20211878.2
(22) Anmeldetag: 04.12.2020
(51) Int. Cl.: F16J 9/08, F04B 53/14, F16J 9/24

(54) **KOLBENRING FÜR EINEN KOLBENVERDICHTER**

(71) Anmelder: Burckhardt Compression AG, 8404 Winterthur (CH)
(72) Erfinder: Feistel, Norbert, 8548 Ellikon a.d. Thur (CH)
(74) Vertreter: Hepp Wenger Ryffel AG

(57) **Zusammenfassung**

Kolbenring (1) umfassend einen ersten ringförmigen Körper (10) und einen zweiten ringförmigen Körper (20), welche Ringkörper (10, 20) in axialer Richtung (A) benachbart und konzentrisch zueinander angeordnet sind, wobei der erste ringförmige Körper (10) eine radial nach Aussen gerichtete Aussenseite (11), eine obere (12) und eine untere Flanke (13) sowie eine radial nach Innen gerichtete Innenseite (14) aufweist, wobei der zweite ringförmige Körper (20) als segmentierter Dichtring (20) umfassend eine Mehrzahl von Dichtringsegmenten (20a, 20b, 20c) ausgebildet ist, welche Dichtringsegmente (20a, 20b, 20c) jeweils eine radial nach Aussen gerichtete Dichtfläche (21a, 21b, 21c), eine obere (22a, 22b, 22c) und eine untere Dichtringsegmentflanke (23a, 23b, 23c) sowie eine radial nach Innen gerichtete Innenseite (24a, 24b, 24c) aufweisen, wobei die Dichtringsegmente (20a, 20b, 20c) jeweils mittels zumindest einem Führungsmittel (4a, 4b, 4c, 5a, 5b, 5c) am ersten ringförmigen Körper (10) geführt sind, welche Führungsmittel (4a, 4b, 4c, 5a, 5b, 5c) ein Verdrehen der Dichtringsegmente (20a, 20b, 20c) gegen den ersten ringförmigen Körper (10, 20) in Umfangsrichtung (U) im Wesentlichen verhindern und ein Verschieben der Dichtringsegmente (20a, 20b, 20c) querab zur axialen Richtung (A) erlauben.

## Beschreibung

Die vorliegende Erfindung betrifft einen Kolbenring für einen Kolbenverdichter sowie einen Kolbenverdichter mit einem solchen Kolbenring.

Bei Kolbenverdichtern wird das Arbeitsmedium durch einen in einem Zylinder hin- und her beweglichen Kolben verdichtet. Die Dichtelemente, welche den zwischen Kolben und Zylinderinnenwand gebildeten Ringspalt abdichten, werden Kolbenringe genannt.

Der in der EP 3 555 502 A1 beschriebene Kolbenring umfasst einen als Reibdichtelement ausgestalteten Dichtring, welcher entlang der Zylinderinnenwand gleitet und in axialer Richtung beidseitig angeordnete Stützringe, d.h. einen Grundring und einen Deckring, aufweist. Der Dichtring weist drei tangential zur Dichtringinnenseite verlaufende Schnitte auf, welche den Dichtring in drei Dichtringsegmente unterteilen. Ein entlang der Dichtringinnenseite anliegender Spannring erzeugt eine Vorspannung und drückt die einzelnen Dichtringsegmente gegen die Zylinderinnenwand. Der durch Materialabrieb bedingte Verschleiss wird dadurch kompensiert, dass die einzelnen Dichtringsegmente durch den auf ihnen in Richtung der Zylinderinnenwand lastenden Druck nachgeschoben werden. Dadurch weist der Dichtring in radialer Richtung ein gutes Formanpassungsvermögen auf und liegt somit gut dichtend an der Innenwand des Zylinders an, wodurch allfällig auftretende Leckagen verhindert oder reduziert werden. Derartige Kolbenringe sind in Kombination mit Kolbenverdichtern geeignet, deren Kompressionsraum eine hohe Druckbelastung von mehr als 500 bar und/oder eine hohe Temperaturbelastung aufweist.

Nachteilig an derartigen Kolbenringen ist, dass der Dichtring beziehungsweise die Dichtringsegmente beim Nachschieben beschädigt werden könnten, sodass der Dichtring unter Umständen eine reduzierte Dichtwirkung aufweisen könnte.

Ausgehend von dem genannten Stand der Technik liegt der vorliegenden Erfindung die Aufgabe zugrunde, solche und weitere Nachteile des Standes der Technik zu beheben und insbesondere einen Kolbenring der eingangs genannten Art anzugeben, in dem die Dichtelemente ohne Beschädigungsgefahr sicher und gut dichtend an der Zylinderwand eines Kolbenverdichters anliegen.

Der Erfindung liegt ferner die Aufgabe zugrunde, einen Kolbenverdichter umfassend zumindest einen Kolbenring wie nachfolgend beschrieben bereitzustellen, der vorteilhaftere Betriebseigenschaften aufweist, insbesondere eine längere Standzeit.

Die Aufgabe wird durch einen Kolbenring und einen Kolbenverdichter aufweisend die Merkmale der unabhängigen Ansprüche gelöst. Die abhängigen Ansprüche betreffen weitere, vorteilhafte Ausgestaltungen der Erfindung.

Die Aufgabe wird insbesondere gelöst mit einem Kolbenring für einen Kolbenverdichter umfassend einen ersten ringförmigen Körper und einen zweiten ringförmigen Körper, welche in axialer Richtung benachbart und konzentrisch zueinander angeordnet sind.

Der erste ringförmige Körper weist eine radial nach Aussen gerichtete Aussenseite, eine obere und eine untere Flanke sowie eine radial nach Innen gerichtete Innenseite auf. Der zweite ringförmige Körper ist als segmentierter Dichtring ausgebildet und umfasst eine Mehrzahl von Dichtringsegmenten, wobei jedes Dichtringsegment eine radial nach Aussen gerichtete Dichtfläche, eine obere und eine untere Dichtringsegmentflanke sowie eine radial nach Innen gerichtete Innenseite aufweist. Im zusammengesetzten Zustand weist der segmentierte Dichtring somit eine radial nach Aussen gerichtete Dichtringfläche, eine obere und eine untere Dichtringflanke sowie eine radial nach Innen gerichtete Dichtringinnenseite auf. Die Dichtringsegmente sind jeweils mittels zumindest einem Führungsmittel am ersten ringförmigen Körper geführt, wobei die Führungsmittel ein Verdrehen der Dichtringsegmente gegen den ersten ringförmigen Körper in Umfangsrichtung im Wesentlichen verhindern und ein Verschieben der Dichtringsegmente querab zur axialen Richtung, d.h. nach Aussen, erlauben.

Ein gemäss der vorliegenden Erfindung ausgebildeter Kolbenring kann vorzugsweise in einer Kolbenringnut eines Kolbens in einem Kolbenverdichter angeordnet werden und weist im Vergleich zu den aus dem Stand der Technik bekannten Kolbenringen den Vorteil auf, dass die einzelnen Dichtringsegmente im Betrieb nicht in Umfangsrichtung kollidieren können. Durch die vorgeschlagene konstruktive Massnahme lässt sich also eine Beschädigung der Dichtringsegmente verhindern und die Lebensdauer der Kolbenringe erhöhen.

Im Bereich des segmentierten Dichtrings dichtet der Kolbenring gegenüber einer Gegenlauffläche, z.B. der Zylinderinnenwand einer Zylinderlaufbuchse eines Kolbenverdichters, gegen Gasdurchlass aus dem Verdichtungsraum ab. Die einzelnen Dichtringsegmente sind dabei als Reibdichtelemente ausgestaltet, welche entlang der Zylinderinnenwand gleiten, wobei der Kolbenring trockenlaufend oder geschmiert betrieben werden kann. Der erfindungsgemässe Kolbenring ist vorzugsweise in Kombination mit Kolbenverdichtern geeignet, deren Kompressionsraum eine hohe Druckbelastung, insbesondere zwischen 500 bar und 1000 bar, aufweisen.

Der erfindungsgemässe Kolbenring weist im zusammengesetzten Zustand eine radial nach Aussen gerichtete Kolbenringaussenseite, eine radial nach Innen gerichtete Kolbenringinnenseite sowie zwei dazwischen angeordnete, im Wesentlichen parallel zueinander beabstandete, Kolbenringflanken auf. Im erfindungsgemässen Gebrauch des Kolbenringes ist die eine Kolbenringflanke dem Verdichtungsraum zugewandt und die andere, gegenüberliegende Kolbenringflanke dem Kurbelkasten.

In einer bevorzugten Ausführungsform bestehen die Führungsmittel darin, dass die sich berührenden Flanken des ersten ringförmigen Körpers und der Dichtringsegmente gegenseitig formschlüssig verlaufend ausgestaltet sind. Beispielsweise sind die Führungsmittel als Führungsrippen, welche in Führungsnuten eingreifen, ausgebildet. Es ist erfindungsgemäss denkbar, dass die Führungsrippen dichtringseitig und die Führungsnuten am ersten ringförmigen Körper angeordnet sind. Es ist erfindungsgemäss ebenfalls denkbar, dass die Führungsrippen am ersten ringförmigen Körper und die Führungsnuten dichtringseitig angeordnet sind. Prinzipiell ist es auch denkbar, dass beide ringförmige Körper sowohl Führungsrippen als auch Führungsnuten aufweisen, wobei die Führungsrippen und Führungsnuten derart an den sich berührenden Flanken der beiden ringförmigen Körper ausgebildet und angeordnet sind, dass die sich berührenden Flanken gegenseitig formschlüssig verlaufend ausgestaltet sind.

Durch die Integration der Führungsmittel in die sich berührenden Flanken wird der konstruktive Aufwand minimiert und die mechanische Belastbarkeit des Kolbenringes erhöht.

In einer bevorzugten Ausführungsform des erfindungsgemässen Kolbenringes beträgt die Tiefe der Führungsnuten zwischen 0.5 mm und 4 mm, bevorzugt zwischen 1 mm und 2 mm. Alternativ oder zusätzlich dazu weisen die Führungsnuten eine Breite zwischen 10 mm und 50 mm, bevorzugt zwischen 20 mm und 40 mm, besonders bevorzugt zwischen 25 mm und 35 mm auf.

Ein solcher Kolbenring weist den Vorteil auf, dass die Dichtringsegmente besonders sicher am ersten ringförmigen Körper geführt sind.

In einer bevorzugten Ausführungsform des erfindungsgemässen Kolbenringes ist der erste ringförmige Körper einstückig, bevorzugt endlos, ausgestaltet. Dadurch wird die Leckage reduziert und die mechanische Festigkeit des Kolbenrings erhöht.

In einer weiteren bevorzugten Ausführungsform des erfindungsgemässen Kolbenringes ist der zweite ringförmige Körper aus drei Dichtringsegmenten gebildet. Besonders bevorzugt erstreckt sich jedes der drei Dichtringsegmente über einen Kreisbogen von 120°, wodurch jedes der Dichtringsegmente die gleiche mechanische Belastbarkeit aufweist.

Bevorzugt weist der segmentierte Dichtring eine axiale Dichtringhöhe im Bereich von 1 mm bis 6 mm auf, damit der zweite ringförmige Körper in axialer Richtung möglichst kompakt ist und wenig Platz in Anspruch nimmt.

Im einsatzgemässen Zustand ist jeweils ein erfindungsgemässer Kolbenring in einer umlaufenden Kolbenringnut eines Kolbens angeordnet. Die umlaufenden Kolbenringnuten sind derart ausgestaltet, dass im Betrieb des Kolbenverdichters Fluid aus dem Verdichtungsraum in den hinter den Dichtringsegmenten liegenden Nutraum dringen und die Dichtringsegmente bei ausreichendem Fluiddruck nach Aussen auf eine Gegenlauffläche, z.B. auf die Zylinderinnenwand einer Zylinderlaufbuchse eines Kolbenverdichters, pressen kann. Dazu muss das axiale Flankenspiel der Kolbenringe in den umlaufenden Kolbenringnuten genügend gross sein.

Dadurch kann auf den Einsatz eines Spannringes, welcher an der radial nach Innen gerichteten Innenseite des segmentierten Dichtrings anliegt und die Dichtringsegmente an eine Gegenlauffläche anpresst, verzichtet werden. Durch den fluiddruckabhängigen Anpressdruck der Dichtringsegmente gegen die Zylinderinnenwand wird zudem weniger Material an den radial nach Aussen gerichteten Dichtflächen der Dichtringsegmente abgetragen.

Der erfindungsgemässe Kolbenring kann in einer bevorzugten Ausführungsform neben dem ersten und dem zweiten ringförmigen Körper optional einen dritten ringförmigen Körper umfassen. Der dritte ringförmige Körper weist eine radial nach Aussen gerichtete Aussenseite, eine obere und eine untere Flanke sowie eine radial nach Innen gerichtete Innenseite auf. In dieser Ausführungsform ist der segmentierte Dichtring zwischen dem ersten ringförmigen Körper und dem dritten ringförmigen Körper angeordnet.

Bei dem ersten ringförmigen Körper und dem dritten ringförmigen Körper handelt es sich um Stützringe, welche in axialer Richtung beidseitig am segmentierten Dichtring angeordnet sind.

Der dritte ringförmige Körper ist im Betriebszustand vorzugsweise in axialer Richtung benachbart zum Dichtring niederdruckseitig angeordnet und so bemessen, dass er bezüglich des Gegenlaufpartners berührungsfrei, aber mit möglichst geringem Spiel verläuft.

Ein solcher Kolbenring, welcher auch als Sandwich-Kolbenring bezeichnet wird, erlaubt eine Reduzierung der Leckrate.

Besonders bevorzugt ist der dritte ringförmige Körper einstückig, insbesondere endlos, ausgestaltet. Dadurch kann die Leckage noch erheblich mehr reduziert werden.

Durch die erfindungsgemässe Sandwich-Ausführung des Kolbenrings ist es möglich, den als segmentierten Dichtring ausgebildeten, zweiten ringförmigen Körper aus einem Kunststoffmaterial auszugestalten, das an sich in einer "selbsttragenden" Ausführungsform, d.h. ohne Stützringe, zum Abdichten von hohen Druckdifferenzen nicht geeignet wäre.

In einer bevorzugten Ausführungsform ist der segmentierte Dichtring im Wesentlichen aus Polytetrafluorethylen (PTFE) hergestellt, wobei bei sehr hohen Druckdifferenzen auch Hochtemperaturpolymere wie Polyetheretherketon (PEEK), Polyimid (PI), Polyamidimid (PAI), Polyphenylensulfid (PPS) oder Gemische davon verwendet werden. Solche Polymere halten aufgrund ihrer mechanischen Eigenschaften hohen Differenzdrücken im Wesentlichen deformationsfrei stand und weisen zudem eine hohe Wärmefestigkeit auf. Optional kann der segmentierte Dichtring mit einem oder mehreren Füllstoffen, insbesondere mit Kohle, Graphit, Glasfasern, Molybdändisulfid (MoS₂) und/oder Bronze, gefüllt sein. Dadurch lassen sich insbesondere die Trockenlaufeigenschaften des Dichtrings verbessern.

In einer bevorzugten Ausführungsform sind der erste ringförmige Körper und/oder der dritte ringförmige Körper im Wesentlichen aus einem Hochtemperaturpolymer, insbesondere aus Polyether-etherketon (PEEK), Polyimid (PI), Polyamidimid (PAI), Poly-phenylensulfid (PPS) oder Epoxidharz, aus einem Faserverbundmaterial, insbesondere aus Kohlefasern in einer Matrix von Polyetheretherketon (PEEK) oder Epoxidharz, aus Metall, insbesondere aus einer Kupferlegierung, oder aus einer technischen Keramik, insbesondere aus Aluminiumoxid, Zirkonoxid, Siliziumkarbid oder Siliziumnitrid, hergestellt. Solche Materialien weisen sehr hohe mechanische Festigkeiten auf, wodurch die Standzeit des Kolbenringes wesentlich erhöht werden kann. Optional können der erste ringförmige Körper und/oder der dritte ringförmige Körper mit einem oder mehreren Füllstoffen, insbesondere mit Kohle, Graphit, Glasfasern, Molybdändisulfid (MoS₂) und/oder Bronze, gefüllt sein. Dadurch lassen sich insbesondere ihre Trockenlaufeigenschaften verbessern.

In einer bevorzugten Ausführungsform des erfindungsgemässen Sandwich-Kolbenrings ist zumindest ein Dichtringsegment des segmentierten Dichtrings am ersten ringförmigen Körper und am dritten ringförmigen Körper geführt. Vorzugsweise sind alle Dichtringsegmente des segmentierten Dichtrings am ersten ringförmigen Körper und am dritten ringförmigen Körper geführt. Dadurch kann zum einen eine besonders sichere Führung der Dichtringsegmente erreicht werden und zum anderen auch die Einbaurichtung der drei ringförmigen Körper vorgegeben werden, wodurch Fehler beim Zusammen- bzw. Einbau der erfindungsgemässen Kolbenringe reduziert werden.

Die Rückströmung des im Betrieb des Kolbenverdichters in den Kolbenringnuten zwischengespeicherten Gases lässt sich - neben dem vorgehend beschriebenen axialen Flankenspiel der Kolbenringe in den umlaufenden Kolbenringnuten - durch sogenannte Druckausgleichs- oder Rückströmkanäle noch erheblich verbessern, so dass die Dichtringsegmente in dieser Phase nahezu keine Dichtwirkung besitzen und daher auch keinem Verschleiss unterliegen.

In einer bevorzugten Ausführungsform des erfindungsgemässen Kolbenringes weist der erste ringförmige Körper oder der dritte ringförmige Körper auf seiner zum Dichtring abgewandten Flanke zumindest einen radial verlaufenden Rückströmkanal auf. Der Rückströmkanal erstreckt sich in radialer Richtung über die gesamte Flankenbreite und ist im erfindungsgemässen Gebrauch des Kolbenringes dem Verdichtungsraum zugewandt. Bevorzugt weist der Rückströmkanal eine dreieckförmige Fase auf.

Besonders bevorzugt sind die Rückströmkanäle im zusammengesetzten Zustand des Kolbenringes jeweils im Bereich der Segmentenden des segmentierten Dichtrings angeordnet, wodurch die Rückströmung des in den Kolbenringnuten zwischengespeicherten Fluids nochmals erheblich verbessert werden kann.

Es ist vorteilhaft, wenn der erste ringförmige Körper und - falls vorhanden - der dritte ringförmige Körper im betriebswarmen Zustand "spielfrei" in die Bohrung des Zylinders passen. Damit der erste und gegebenenfalls auch der dritte ringförmige Körper während dem Einlaufprozess nicht klemmen, sind in einer bevorzugten Ausführungsform des erfindungsgemässen Kolbenringes oder Sandwich-Kolbenringes die radial nach Aussen gerichtete Aussenseite des ersten ringförmigen Körpers und/oder die radial nach Aussen gerichtete Aussenseite des dritten ringförmigen Körpers ausgehend vom segmentierten Dichtring sich in axialer Richtung verjüngend, bevorzugt konisch verjüngend, ausgestaltet.

Dadurch wird erreicht, dass die radial nach Aussen gerichtete Aussenseite des ersten und/oder des dritten ringförmigen Körpers beim Einlaufprozess nicht über ihre gesamte axiale Höhe abgetragen werden muss, sondern nur derjenige Bereich, welcher ansonsten über die Zylinderinnenwand verstehen würde. Somit ist der erfindungsgemässe Kolbenring oder Sandwich-Kolbenring im betriebswarmen Zustand spielfrei in der Bohrung des Zylinders angeordnet.

In einer bevorzugten Ausführungsform des erfindungsgemässen Kolbenringes berühren sich im zusammengesetzten Zustand des Dichtrings jeweils zwei benachbarte Dichtringsegmente entlang einer Schnittlinie, welche sich in radialer Richtung von der Innenseite zur Dichtfläche der jeweiligen Dichtringsegmente hin erstreck. Anders ausgedrückt berühren sich im zusammengesetzten Zustand des Dichtrings jeweils zwei benachbarte Ringsegmente entlang einer Schnittlinie, welche mit einer Tangente an die radial nach Innen gerichtete Dichtringinnenseite einen Schnittwinkel bildet, der im Wesentlichen 90° entspricht.

Derartige Dichtringsegmente sind besonders robust und einfach herstellbar.

In einer alternativen bevorzugten Ausführungsform des erfindungsgemässen Kolbenringes sind die Enden der jeweiligen Dichtringsegmente in Umfangsrichtung axial abgestuft ausgeführt. In dieser Ausführungsform sind die abgestuften Enden benachbarter Dichtringsegmente zur Ausbildung einer axialen Abdichtung in axialer Richtung zumindest teilweise überlappend angeordnet.

Durch diese konstruktive Ausgestaltung der Dichtringsegmente wird eine verbesserte axiale Abdichtung, insbesondere im Bereich der Segmentenden erreicht.

Die Aufgabe wird weiterhin durch einen Kolbenverdichter, insbesondere trockenlaufender Kolbenverdichter, umfassend zumindest einen Kolbenring wie vorhergehend beschrieben gelöst.

Verschiedene Ausführungsformen der Erfindung werden nachfolgend anhand von Zeichnungen beschrieben, wobei gleiche oder entsprechende Elemente grundsätzlich mit gleichen Bezugszeichen versehen sind. Es zeigen:
- Fig. 1a: Eine perspektivische Ansicht eines ersten ringförmigen Körpers;
- Fig. 1b: eine Draufsicht auf den in Fig. 1a gezeigten ersten ringförmigen Körper;
- Fig. 1c: eine Untenansicht auf den in Fig. 1a gezeigten ersten ringförmigen Körper;
- Fig. 2a: eine perspektivische Ansicht eines zweiten ringförmigen Körpers, welcher als segmentierter Dichtring ausgebildet ist;
- Fig. 2b: eine Draufsicht auf den in Fig. 2a gezeigten segmentierten Dichtring;
- Fig. 3: eine Draufsicht auf einen dritten ringförmigen Körper;
- Fig. 4: einen Kolbenring umfassend den in Fig. 1a gezeigten ersten ringförmigen Körper und den in Fig. 2a gezeigten zweiten ringförmigen Körper;
- Fig. 5: einen Kolbenring umfassend drei ringförmige Körper;
- Fig. 6: einen Längsschnitt durch eine an einem Kolben angeordnete Dichtungsanordnung;
- Fig. 7: einen Längsschnitt durch ein zweites Ausführungsbeispiel einer Dichtungsanordnung.

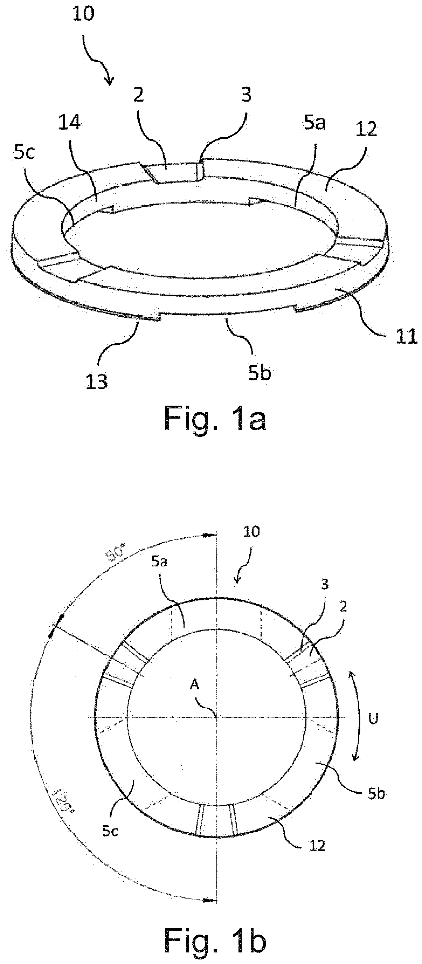

Figur 1a zeigt eine perspektivische Ansicht eines ersten ringförmigen Körpers 10. Der ringförmige Körper 10 weist eine radial nach Aussen gerichtete Aussenseite 11, eine obere Flanke 12, eine untere Flanke 13 sowie eine radial nach Innen gerichtete Innenseite 14 auf. Der erste ringförmige Körper 10 ist als endloser Ring ausgestaltet und umfasst drei in Umfangsrichtung verteilt angeordnete, sich in radialer Richtung entlang der gesamten Flankenbreite erstreckende Rückströmkanäle 2. Die Rückströmkanäle 2 weisen am Übergang vom Rückströmkanal 2 zur Flanke 12 jeweils zwei dreieckförmige Fasen 3 auf. Der ringförmige Körper 10 umfasst an der zu den Rückströmkanälen 2 abgewandten Flanke 13 ferner drei in Umfangsrichtung verteilt angeordnete Führungsmittel 5a-c, welche in diesem Ausführungsbeispiel als nutförmige Ausnehmungen ausgebildet sind, wie nachfolgend noch näher beschrieben wird.

Figur 1b zeigt eine Draufsicht auf den ersten ringförmigen Körper aus Figur 1a. Gezeigt sind die drei in radialer Richtung verlaufenden Rückströmkanäle 2 mit Fasen 3, welche auf der oberen Flanke 12 angeordnet sind und bezogen auf die Ringachse A in Umfangsrichtung U zueinander um 120° versetzt angeordnet sind. Die Mitten der Führungsmittel 5a-c und der Rückströmkanäle 2 sind in Umfangsrichtung U zueinander um 60° versetzt angeordnet.

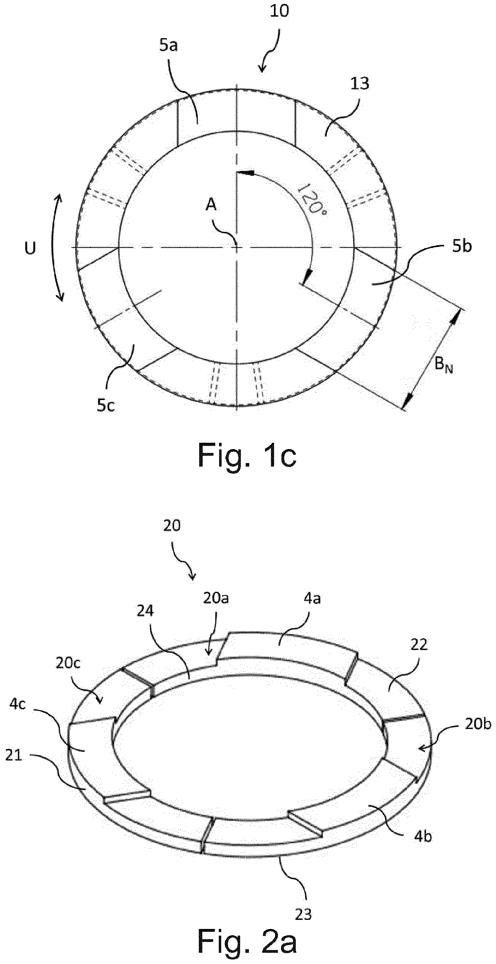

Figur 1c zeigt eine Untenansicht auf den ersten ringförmigen Körper aus Figur 1a und 1b. Gezeigt sind die drei querab zur axialen Richtung A auf der unteren Flanke 13 des ersten ringförmigen Körpers 10 verlaufenden nutförmigen Ausnehmungen 5a-c, welche in Umfangsrichtung U zueinander um 120° versetzt angeordnet sind. In diesem Ausführungsbeispiel weisen die nutförmigen Ausnehmungen 5a-c jeweils eine Nutbreite B_{N} von 27,5 mm und eine Nuttiefe T_{N} von 1,6 mm auf.

Figur 2a zeigt eine perspektivische Ansicht eines zweiten ringförmigen Körpers 20, welcher als segmentierter Dichtring 20 umfassend drei Dichtringsegmente 20a-c aufweist. Im zusammengesetzten Zustand weist der segmentierte Dichtring 20 eine radial nach Aussen gerichtete Dichtringfläche 21, eine obere 22 und eine untere Dichtringflanke 23 sowie eine radial nach Innen gerichtete Dichtringinnenseite 24 auf, welche jeweils durch die radial nach Aussen gerichteten Dichtflächen 21a-c, die oberen 22a-c und unteren Dichtringsegmentflanken 23a-c sowie die radial nach Innen gerichteten Innenseiten 24a-c der jeweiligen Dichtringsegmente 20a-c gebildet werden (Bezugszeichen aus Gründen der Übersichtlichkeit nicht in Figur 2a gezeigt). Die drei Dichtringsegmente 20a-c weisen jeweils ein als Führungsrippe ausgestaltetes Führungsmittel 4a-c auf.

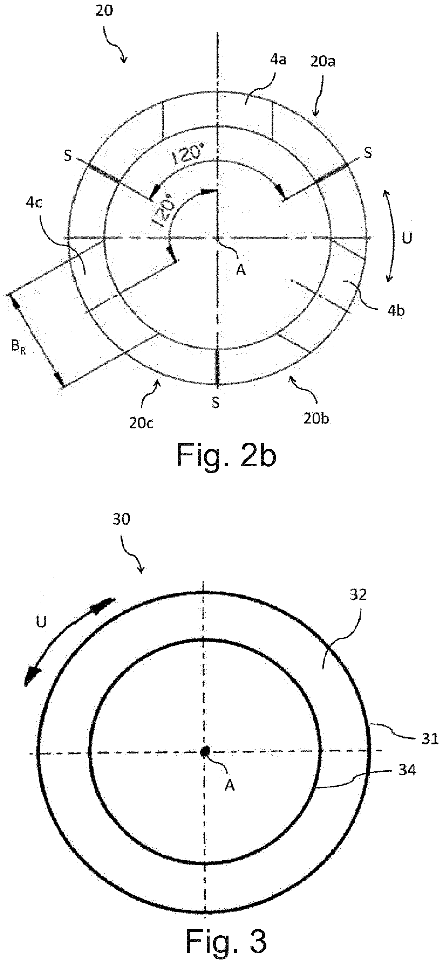

Figur 2b zeigt eine Draufsicht auf den in Figur 2a dargestellten segmentierten Dichtring 20. Der Dichtring 20 weist drei radiale Schnitte S auf, welche sich jeweils in radialer Richtung von der Innenseite zur Dichtfläche des segmentierten Dichtrings 20 hin erstrecken. Jedes der drei Dichtringsegmente 20a-c erstreckt sich über einen Kreisbogen von 120° und umfasst eine Führungsrippe 4a-c, wobei die Führungsrippen in Umfangsrichtung U zueinander um 120° versetzt angeordnet sind. Die Breite der Führungsrippen B_{R} ist derart gewählt, dass die Führungsrippen 4a-c im Wesentlichen "spielfrei" in die Führungsnuten 5a-c des in den Figuren 1a-c gezeigten ersten ringförmigen Körpers 10 in Eingriff bringbar sind. Somit wird ein gegenseitiges Verdrehen bzw. Verschieben der Dichtringsegmente 20a-c am ersten ringförmigen Körper 10 in Umfangsrichtung U verhindert. Im dargestellten Ausführungsbeispiel beträgt die Breite der Führungsrippen B_{R} etwa 27,5 mm und die Tiefe der Führungsrippen T_{R} etwa 1,5 mm.

Figur 3 zeigt eine Draufsicht auf einen dritten ringförmigen Körper 30, der eine radial nach Aussen gerichtete Aussenseite 31, eine obere Flanke 32 und eine untere Flanke (nicht gezeigt) sowie eine radial nach Innen gerichtete Innenseite 34 aufweist. Der ringförmige Körper 30 ist als endloser Ring ausgebildet. Der erste ringförmige Körper 10, der segmentierte Dichtring 20 und der dritte ringförmige Körper 30 sind in einer senkrecht zur Umfangsrichtung U verlaufenden axialen Richtung A nacheinander folgend angeordnet, wobei der segmentierte Dichtring 20 zwischen dem ersten und dem dritten ringförmigen Körper angeordnet ist (nicht gezeigt).

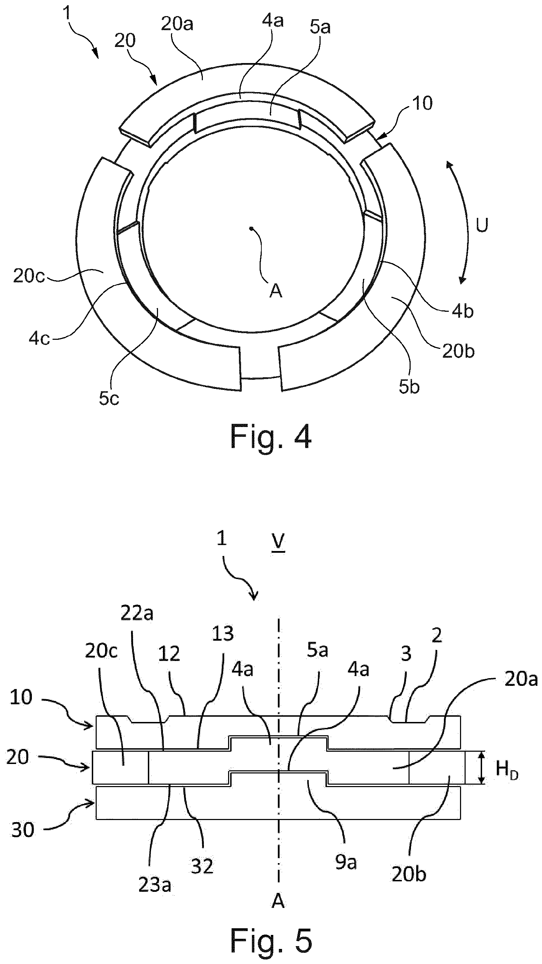

Figur 4 zeigt einen Kolbenring 1 umfassend den in Fig. 1a gezeigten ersten ringförmigen Körper 10 und den in Fig. 2a gezeigten zweiten ringförmigen Körper 20, wobei die Dichtringsegmente 20a-c mittels Führungsmitteln 4a-c, 5a-c am ersten ringförmigen Körper 10 geführt sind. In dem gezeigten Ausführungsbeispiel sind die Führungsmittel 4a-c, 5a-c durch die gegenseitig formschlüssige Ausgestaltung der sich berührenden Flanken des ersten ringförmigen Körpers 10 und der Dichtringsegmente 20a-c gebildet. Dabei greifen die

Dichtring 20 seitig angeordneten Führungsrippen 4a-c derart in die Deckring 10 seitig angeordneten Führungsnuten 5a-c ein, dass ein Verdrehen der Dichtringsegmente 20a-c gegen den ersten ringförmigen Körper 10 in Umfangsrichtung U im Wesentlichen verhindert wird und die Dichtringsegmente 20a-c querab zur axialen Richtung A verschiebbar sind.

Figur 5 zeigt einen Längsschnitt durch einen Kolbenring 1 umfassend einen ersten ringförmigen Körper 10, einen zweiten ringförmigen Körper 20 und einen dritten ringförmigen Körper 30. Der zweite ringförmige Körper 20 ist als segmentierter Dichtring mit drei Dichtringsegmenten 20a-c ausgebildet, wobei der segmentierte Dichtring 20 zwischen dem ersten ringförmigen Körper 10 und dem dritten ringförmigen Körper 30 angeordnet ist. Der erste ringförmige Körper 10 weist auf seiner dem Verdichtungsraum V zugewandten Flanke 12 mehrere Rückströmkanäle 2 auf, welche im zusammengesetzten Zustand des Kolbenringes 1 jeweils im Bereich der Segmentenden des segmentierten Dichtrings 20 in axialer Richtung A versetzt angeordnet sind. In dem in Figur 5 gezeigten Ausführungsbeispiel sind die sich jeweils berührenden Flanken der ringförmigen Körper 10, 20, 30 gegenseitig formschlüssig verlaufend ausgebildet, so dass alle Dichtringsegmente 20a-c mittels Führungsmitteln 4a-c, 5a-c, 9a-c am ersten ringförmigen Körper 10 und am dritten ringförmigen Körper 30 geführt sind (nur für Dichtringsegment 20a gezeigt). Das Dichtringsegment 20a weist dabei auf seiner dem ersten ringförmigen Körper 10 zugewandten Flanke 22a ein als Führungsrippe ausgebildetes Führungsmittel 4a auf, welches in ein als Führungsnut ausgebildetes Führungsmittel 5a eingreift, welches an der dem segmentierten Dichtring 20 zugewandten Flanke 13 des ersten ringförmigen Körpers 10 ausgebildet ist. Das Dichtringsegment 20a weist ferner auf seiner dem dritten ringförmigen Körper 30 zugewandten Flanke 23a ein zweites Führungsmittel 4a auf, welches als Führungsnut ausgebildet ist und mit einem an der dem segmentierten Dichtring 20 zugewandten Flanke 32 des dritten ringförmigen Körpers 30 angeordneten Führungsmittel 9a eingreift. Die Führungsmittel 5a, 4a, 4a, 9a sind derart an den jeweiligen Flanken 13, 22a, 23a, 32 ausgebildet, dass die Einbaurichtung der sie umfassenden ringförmigen Körper 10, 20, 30 in axialer Richtung vorgegeben ist. In diesem Ausführungsbeispiel beträgt die axiale Dichtringhöhe H_{D} 4,5 mm.

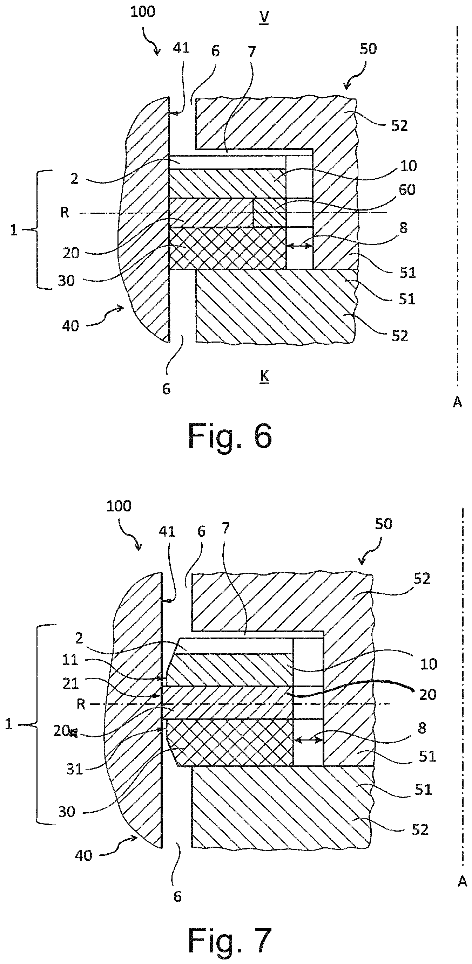

Figur 6 zeigt einen Längsschnitt durch einen Kolbenverdichter 100 umfassend einen Zylinder 40 mit einer Zylinderinnenwand 41, einen Kolben 50 sowie zumindest einen im Kolben 50 angeordneten erfindungsgemässen Kolbenring 1 in eingefahrenem Zustand. Der Kolben 50 ist als ein gebauter Kolben ausgestaltet und umfasst eine Mehrzahl von in axialer Richtung A nacheinander angeordneten Kolbenkörpern 51. Jeder Kolbenkörper 51 weist eine Kammerscheibe 52 auf, welche eine umlaufende Kolbenringnut 7 zur Aufnahme eines Kolbenringes 1 ausbildet. In Figur 6 ist der Verdichtungsraum V des Kolbenverdichters 100 oben angeordnet und der niederdruckseitige Kurbelkasten K unten angeordnet. Der Kolbenring 1 umfasst einen Dichtring 20, einen optionalen Spannring 60, einen ersten ringförmigen Körper 10 sowie einen dritten ringförmigen Körper 30. Der Spannring 60 übt vorzugsweise eine in radialer Richtung R nach Aussen wirkende Vorspannung auf den Dichtring 20 aus, sodass dessen Richtringsegmente 20a, 20b, 20c insbesondere auch bei einem drucklosen Zustand mit den nach Aussen gerichteten Dichtflächen 21 an der Zylinderinnenwand 41 anliegen. Im vorliegenden Ausführungsbeispiel ist der erste ringförmige Körper 10 als Deckring und der dritte ringförmige Körper 30 als Stütz- bzw. Grundring ausgebildet. Der Kolbenring 1 ist in radialer Richtung R unter Ausbildung eines Innenspaltes 8 bezüglich der Kammerscheibe 52 beabstandet. Der Innenspalt 8 ist über einen auf der dem Verdichtungsraum zugewandten Flanke des Deckrings 10 ausgebildeten Rückströmkanal 2 und den verdichtungsraumseitigen Aussenspalt 6 Fluid leitend mit einem in der dargestellten Ansicht weiter oben und nicht sichtbaren Raum verbunden.

Figur 7 zeigt einen Längsschnitt durch den Kolbenverdichter 100 aus Figur 6 jedoch mit einem zweiten Ausführungsbeispiel eines erfindungsgemässen Kolbenringes 1 im Neuzustand, d.h. bevor der Dichtring 20 einem Verschleiss unterliegt. In einer vorteilhaften Ausführungsform ist der Dichtring 20 beziehungsweise dessen dargestelltes Dichtringsegment 20a derart ausgestaltet, dass dessen radial nach Aussen gerichtete Dichtfläche 21 im Neuzustand in radialer Richtung R über die Aussenseite 11 des Deckrings 10 und über die Aussenseite 31 des Grundrings 30 hinausragt. Dies hat zur Folge, dass der Dichtring 20 während der Einlaufphase an der Zylinderinnenwand 41 ansteht, sodass der Spalt zwischen der aussenseitigen Dichtfläche 21 und Zylinderinnenwand 41 äusserst gering ist, und die Dichtringsegmente 20a-c durch den im Innenspalt 8 anliegenden Druck in radialer Richtung R nach Aussen gedrückt werden und dabei an der aussenseitigen Dichtfläche 21 Material vom Dichtring 20 abgetragen wird, bis der Dichtring 20 im betriebswarmen Zustand sich an die Form der Bohrung des Zylinders 40 anpasst hat. Im nachfolgenden Betrieb des Kolbenverdichters 100 unterliegen die aussenseitigen Dichtflächen 21 der Dichtringsegmente 20a-c einem Verschliess, wobei die sich verschleissenden Dichtringsegmente 20a-c, auf Grund des im Innenspalt 8 anliegenden Druck, in radialer Richtung R nach Aussen gedrückt und bei entsprechendem Verschleiss der Dichtflächen 21 in radialer Richtung R nach Aussen geschoben werden, sodass die Dichtwirkung zwischen der aussenseitigen Dichtfläche 21 und der Zylinderinnenwand 41 trotz des auftretenden Verschleisses erhalten bleibt. In dem in Figur 7 gezeigten Ausführungsbeispiel sind der Deckring 10 und der Stützring 30 jeweils derart ausgestaltet, dass sich ihre radial nach Aussen gerichteten Aussenseiten 11 bzw. 31 ausgehend vom Dichtring 20 in axialer Richtung A zumindest teilweise konisch verjüngen, sodass die radial nach Aussen gerichteten Aussenseiten 11 und 31 des Deckringes 10 und des Stützringes 30 im eingefahrenen und betriebswarmen Zustand nicht über ihre gesamte axiale Höhe an die Zylinderinnenwand 40 anstehen. Der in Figur 7 dargestellt Kolbenring 1 weist im Unterschied zum Kolbenring aus Figur 6 darüber hinaus an der radial nach Innen gerichteten Innenseite des Dichtrings 20 keinen Spannring zum Anpressen des dargestellten Dichtringsegments an die Zylinderinnenwand 41 auf.

### Bezugszeichen

- 1: Kolbenring
- 2: Rückströmkanal
- 3: Dreieckförmige Fase
- 4: Führungsmittel am zweiten ringförmigen Körper
- 5: Führungsmittel am ersten ringförmigen Körper
- 6: Aussenspalt
- 7: Umlaufende Kolbenringnut
- 8: Innenspalt
- 9: Führungsmittel am dritten ringförmigen Körper
- 10: Erster ringförmiger Körper
- 11: Aussenseite des ersten ringförmigen Körpers
- 12: Obere Flanke des ersten ringförmigen Körpers
- 13: Untere Flanke des ersten ringförmigen Körpers
- 14: Innenseite des ersten ringförmigen Körpers
- 20: Zweiter ringförmiger Körper
- 21: Dichtfläche des zweiten ringförmigen Körpers
- 22: Obere Flanke des zweiten ringförmigen Körpers
- 23: Untere Flanke des zweiten ringförmigen Körpers
- 24: Innenseite des zweiten ringförmigen Körpers
- 30: Dritter ringförmiger Körper
- 31: Aussenseite des dritten ringförmigen Körpers
- 32: Obere Flanke des dritten ringförmigen Körpers
- 33: Untere Flanke des dritten ringförmigen Körpers
- 34: Innenseite des dritten ringförmigen Körpers
- 40: Zylinder
- 41: Zylinderinnenwand
- 50: Kolben
- 51: Kolbenkörper
- 52: Kammerscheibe
- 60: Spannring
- 100: Kolbenverdichter
- A: Axialrichtung
- R: Radialrichtung
- U: Umfangsrichtung
- S: Schnittlinie
- B_{N}: Breite der Führungsnut
- T_{N}: Tiefe der Führungsnut
- B_{R}: Breite der Führungsrippe
- T_{R}: Tiefe der Führungsrippe

## Patentansprüche

1. Kolbenring (1), insbesondere für einen Kolbenverdichter (100), umfassend
einen ersten ringförmigen Körper (10) und einen zweiten ringförmigen Körper (20), welche Ringkörper (10, 20) in axialer Richtung (A) benachbart und konzentrisch zueinander angeordnet sind,
wobei der erste ringförmige Körper (10) eine radial nach Aussen gerichtete Aussenseite (11), eine obere (12) und eine untere Flanke (13) sowie eine radial nach Innen gerichtete Innenseite (14) aufweist,
wobei der zweite ringförmige Körper (20) als segmentierter Dichtring (20) umfassend eine Mehrzahl von Dichtringsegmenten (20a, 20b, 20c) ausgebildet ist, welche Dichtringsegmente (20a, 20b, 20c) jeweils eine radial nach Aussen gerichtete Dichtfläche (21a, 21b, 21c), eine obere (22a, 22b, 22c) und eine untere Dichtringsegmentflanke (23a, 23b, 23c) sowie eine radial nach Innen gerichtete Innenseite (24a, 24b, 24c) aufweisen,
wobei die Dichtringsegmente (20a, 20b, 20c) jeweils mittels zumindest einem Führungsmittel (4a, 4b, 4c, 5a, 5b, 5c) am ersten ringförmigen Körper (10) geführt sind, welche Führungsmittel (4a, 4b, 4c, 5a, 5b, 5c) ein Verdrehen der Dichtringsegmente (20a, 20b, 20c) gegen den ersten ringförmigen Körper (10, 20) in Umfangsrichtung (U) im Wesentlichen verhindern und ein Verschieben der Dichtringsegmente (20a, 20b, 20c) querab zur axialen Richtung (A) erlauben.

2. Kolbenring (1) nach Anspruch 1, wobei die Führungsmittel (4a, 4b, 4c, 5a, 5b, 5c) darin bestehen, dass die sich berührenden Flanken des ersten ringförmigen Körpers (10) und der Dichtringsegmente (20a, 20b, 20c) gegenseitig formschlüssig verlaufend ausgestaltet sind.

3. Kolbenring (1) nach Anspruch 1 oder 2, wobei die Führungsmittel (4a, 4b, 4c, 5a, 5b, 5c) als Führungsrippen, welche in Führungsnuten eingreifen, ausgebildet sind.

4. Kolbenring (1) nach Anspruch 3, wobei die Tiefe der Führungsnuten (T_{N}) zwischen 0.5 mm und 4 mm, bevorzugt zwischen 1 mm und 2 mm beträgt und/oder wobei die Führungsnuten eine Breite (B_{N}) zwischen 10 mm und 50 mm, bevorzugt zwischen 20 mm und 40 mm, besonders bevorzugt zwischen 25 mm und 35 mm aufweisen.

5. Kolbenring (1) nach einem der vorhergehenden Ansprüche, wobei der erste ringförmige Körper (10) einstückig, bevorzugt endlos, ausgestaltet ist.

6. Kolbenring (1) nach einem der vorhergehenden Ansprüche, wobei der zweite ringförmige Körper (20) aus drei Dichtringsegmenten (20a, 20b, 20c) gebildet ist, welche sich bevorzugt jeweils über einen Kreisbogen von 120° erstrecken.

7. Kolbenring (1) nach einem der vorhergehenden Ansprüche, wobei der segmentierte Dichtring (20) eine axiale Dichtringhöhe (H_{D}) im Bereich von 1 mm bis 6 mm aufweist.

8. Kolbenring (1) nach einem der vorhergehenden Ansprüche, wobei an der radial nach Innen gerichteten Innenseite des segmentierten Dichtrings (20) kein Spannring (60) zum Anpressen der Dichtringsegmente (20a, 20b, 20c) an eine Gegenlauffläche anliegt.

9. Kolbenring (1) nach einem der vorhergehenden Ansprüche, umfassend einen dritten, bevorzugt endlosen, ringförmigen Körper (30) mit einer radial nach Aussen gerichteten Aussenseite (31), einer oberen (32) und einer unteren Flanke (33) sowie einer radial nach Innen gerichteten Innenseite (34), wobei der segmentierte Dichtring (20) zwischen dem ersten ringförmigen Körper (10) und dem dritten ringförmigen Körper (30) angeordnet ist.

10. Kolbenring (1) nach Anspruch 9, wobei zumindest ein Dichtringsegment, vorzugsweise aller Dichtringsegmente (20a, 20b, 20c) des segmentierten Dichtungsrings (20), am ersten ringförmigen Körper (10) und am dritten ringförmigen Körper (30) geführt ist.

11. Kolbenring (1) nach einem der vorhergehenden Ansprüche, wobei der erste ringförmige Körper (10) oder der dritte ringförmige Körper (30) auf seiner zum Dichtring (20) abgewandten Flanke zumindest einen radial verlaufenden Rückströmkanal (2) aufweist, welcher Rückströmkanal (2) sich in radialer Richtung über die gesamte Flankenbreite erstreckt und im erfindungsgemässen Gebrauch des Kolbenringes (1) dem Verdichtungsraum (V) zugewandt ist, wobei der Rückströmkanal (2) bevorzugt eine dreieckförmige Fase (3) aufweist.

12. Kolbenring (1) nach einem der vorhergehenden Ansprüche, wobei sich ausgehend vom segmentierten Dichtring (20) die radial nach Aussen gerichtete Aussenseite (11) des ersten ringförmigen Körpers (10) und/oder die radial nach Aussen gerichtete Aussenseite (31) des dritten ringförmigen Körpers (30) in axialer Richtung (A) verjüngt, bevorzugt konisch verjüngt.

13. Kolbenring (1) nach einem der vorhergehenden Ansprüche, wobei sich im zusammengesetzten Zustand des Dichtrings (20) jeweils zwei benachbarte Dichtringsegmente (20a, 20b, 20c) entlang einer Schnittlinie (S) berühren, welche sich in radialer Richtung von der Innenseite (24a, 24b, 24c) zur Dichtfläche (21a, 21b, 21c) der jeweiligen Dichtringsegmente (20a, 20b, 20c) hin erstreckt.

14. Kolbenring (1) nach Anspruch 1 bis 12, wobei die Enden der jeweiligen Dichtringsegmente (20a, 20b, 20c) in Umfangsrichtung (U) axial abgestuft ausgeführt sind und die abgestuften Enden benachbarter Dichtringsegmente (20a, 20b, 20c) zur Ausbildung einer axialen Abdichtung in axialer Richtung (A) zumindest teilweise überlappend angeordnet sind.

15. Kolbenverdichter (100), insbesondere trockenlaufender Kolbenverdichter (100), umfassend zumindest einen Kolbenring (1) nach einem der Ansprüche 1 bis 14.
